(19) Europäisches Patentamt
European Patent Office
Office européen des brevets

(11) EP 0 851 882 B1

(12) FASCICULE DE BREVET EUROPEEN

(45) Date de publication et mention de la délivrance du brevet:
**12.12.2001 Bulletin 2001/50**

(21) Numéro de dépôt: **96932629.7**

(22) Date de dépôt: **20.09.1996**

(51) Int Cl.$^7$: **C08G 18/18**, C08J 7/04, C08J 5/12, C09D 175/04, C09J 175/04, G06K 19/077

(86) Numéro de dépôt international:
**PCT/FR96/01475**

(87) Numéro de publication internationale:
**WO 97/11104 (27.03.1997 Gazette 1997/14)**

# (54) PROCEDE D'ADHESION D'UN POLYURETHANNE SUR UN SUBSTRAT EN POLYMERE

HAFTUNGSVERFAHREN EINES POLYURETHANS AUF EIN POLYMERSUBSTRAT

METHOD FOR ADHERING A POLYURETHANE TO A POLYMERIC SUBSTRATE

(84) Etats contractants désignés:
**AT BE CH DE ES FR GB IT LI LU NL PT SE**

(30) Priorité: **20.09.1995 FR 9511054**

(43) Date de publication de la demande:
**08.07.1998 Bulletin 1998/28**

(73) Titulaire: **GEMPLUS**
**13881 Gémenos Cédex (FR)**

(72) Inventeurs:
- **LERICHE, Christian, Gustave, Alain**
**F-13530 Trets (FR)**
- **TURIN, Jo[l, Alain, Jérôme**
**F-13008 Marseille (FR)**

(56) Documents cités:
**EP-A- 0 399 311**
**EP-A- 0 411 432**
**WO-A-94/27746**
**DE-A- 2 314 161**
**GB-A- 1 166 742**
**GB-A- 2 138 016**
**US-A- 3 813 380**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 851 882 B1

## Description

L'invention se rapporte à un procédé d'adhésion d'une surface en polyuréthanne bicomposant sur un substrat en polymère. Ce procédé s'applique au domaine du collage de deux polymères, notamment pour la fabrication de cartes à puces avec et/ou sans contacts affleurants.

Les procédés actuels de collage de polyuréthanne bicomposant (PU) sur un substrat en polymère consistent à placer, sur le substrat, une résine comportant les deux composants nécessaires à la formation du PU, c'est-à-dire un polyol et un diisocyanate, et à opérer un pressage pendant quelques minutes.

Cependant, les collages obtenus par ces procédés ne présentent pas une très bonne qualité. En effet, des couches moléculaires d'eau, présentes à la surface du substrat, créent un écran entre le substrat et le polyuréthanne. Cet écran empêche la formation de liaisons Hydrogène et/ou Van der Walls entre le PU et le substrat, qui sont nécessaires à l'obtention d'une adhésion de bonne qualité. L'agent durcisseur du polyuréthanne, c'est-à-dire le diisocyanate, a tendance à réagir à la fois avec le polyol de composition du PU et avec l'humidité de surface.

Une première solution, qui vient immédiatement à l'esprit pour permettre une bonne adhésion du polyuréthanne sur le substrat, sans perturbation par l'humidité de surface, consiste à utiliser une résine dans laquelle le diisocyanate se trouve en excès par rapport au polyol. De cette manière, on peut prévoir que le polyol réagit entièrement avec le diisocyanate et que l'humidité de surface réagit avec l'excès de diisocyanate. Cependant, dans ce cas il se forme des produits de réaction secondaires tels que des ponts urée ou biuret qui forment, eux aussi, un écran à l'interface entre le PU et le substrat si bien qu'ils nuisent à l'obtention d'une adhésion de bonne qualité.

Une deuxième solution, actuellement utilisée, consiste à faire intervenir un catalyseur spécifique permettant d'éviter une trop forte réactivité de l'humidité de surface du substrat sur le diisocyanate et permettant, au contraire, d'augmenter la cinétique de la réaction entre le polyol et le diisocyanate. Ainsi, la réaction entre le polyol et le diisocyanate est favorisée par rapport à la réaction entre l'humidité et le diisocyanate. Le catalyseur spécifique utilisé est le dilaurate de dibutyl étain. Cependant, cette solution n'est pas satisfaisante car il reste toujours une certaine humidité à la surface du substrat, formant un écran entre le polyuréthanne et le substrat, si bien que l'obtention d'une adhésion de bonne qualité est rendue impossible.

La présente invention permet de pallier tous les inconvénients précédemment cités puisqu'elle propose un procédé conforme à l'objet de la revendication 1.

Pour cela, une caractéristique du procédé selon l'invention consiste à utiliser un catalyseur choisi parmi les amines tertiaires.

Selon une autre caractéristique de l'invention, le catalyseur utilisé est du diazabicyclo 2,2,2 octane (DABCO).

Selon une autre caractéristique de l'invention, le matériau du substrat est choisi parmi les polymères présentant des liaisons Hydrogène avec le polyuréthanne.

Le procédé selon la présente invention permet de supprimer tous les inconvénients liés à l'humidité de surface du substrat. Par conséquent, il permet de supprimer l'écran formé par les molécules d'eau à l'interface entre le substrat et le polyuréthanne, de manière à améliorer notablement la qualité de l'adhésion.

Le DABCO est généralement utilisé comme agent de moussage pour réaliser des mousses en polyuréthanne. En revanche, il n'a jamais été utilisé dans _des domaines autres que celui des mousses, tels que celui du collage de deux polymères par exemple.

L'invention a également pour objet une structure de corps de carte à puce conforme à la revendication 7.

D'autres particularités et avantages de l'invention apparaîtront à la lecture de la description faite à tire d'exemple illustratif et non limitatif.

Un mode de réalisation d'un procédé selon l'invention consiste dans un premier temps à placer, sur un substrat en polymère, une résine comportant d'une part un catalyseur et d'autre part, les deux composants nécessaires à la formation du réseau polyuréthanne par polycondensation, c'est-à-dire un polyol et un diisocyanate. Dans un deuxième temps, la résine et le substrat sont pressés pendant quelques minutes.

Des molécules d'eau sont constamment présentes à la surface du substrat. Leur présence est due non seulement à des liaisons Hydrogène et Van der Walls qui se créent entre ces molécules et le substrat, mais aussi à la présence, dans certains substrats polymère tels que des substrats en polychlorure de vinyle (PVC) par exemple, de carbonate de calcium possédant la propriété d'être hygroscopique. Ces molécules d'eau sont réactives vis-à-vis du diisocyanate de composition du polyuréthanne.

L'utilisation du catalyseur, dans le procédé selon la présente invention, est essentielle puisqu'il intervient, de manière avantageuse, simultanément à l'interface entre les deux surfaces polymère et dans le réseau polyuréthanne au moment de sa formation. Il permet ainsi d'augmenter à la fois la cinétique de la réaction entre le diisocyanate et le polyol pour former le réseau PU, et la cinétique de la réaction entre le diisocyanate et les molécules d'eau présentes à la surface du substrat en polymère. De cette manière, l'écran d'humidité susceptible de se former à l'interface entre le polyuréthanne et le substrat est supprimé de façon à améliorer la qualité de l'adhésion entre les deux polymères. Cette suppression est en fait réalisée en transformant les molécules d'eau en polyurée. Ainsi, la polyurée étant compatible avec le polyuréthanne, elle fait partie intégrante de sa structure. L'écran d'humidité ayant été supprimé, des liaisons intermoléculaires Hydrogènes et/ou Van der Walls nécessaires à l'adhésion peuvent alors se former à l'interface entre le polyuréthanne et le substrat.

De manière avantageuse, le catalyseur utilisé dans le procédé selon la présente invention est dissout dans le polyol de composition de la résine et est choisi parmi les amines tertiaires. Les amines tertiaires $(R)_3N$ constituent en effet de bons catalyseurs pour les réactions entre le diisocyanate et l'eau et entre le diisocyanate et le polyol.

La réaction entre le diisocyanate et le polyol permet la formation du réseau polyuréthanne, selon l'équation suivante :

(1)

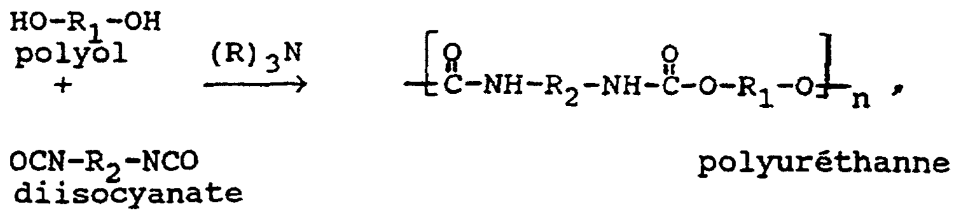


A partir de cette équation, on constate que la stoechiométrie idéale, pour une efficacité réactionnelle optimum lors de la formation du polyuréthanne, est égale à 1. En effet, une mole de polyol réagit avec une mole de diisocyanate.

L'amine tertiaire $(R)_3N$ catalyse simultanément la réaction entre le diisocyanate et l'eau pour faire disparaître l'écran d'humidité en le transformant en polyurée qui est compatible avec la structure du PU. La réaction mise en jeu est la suivante :

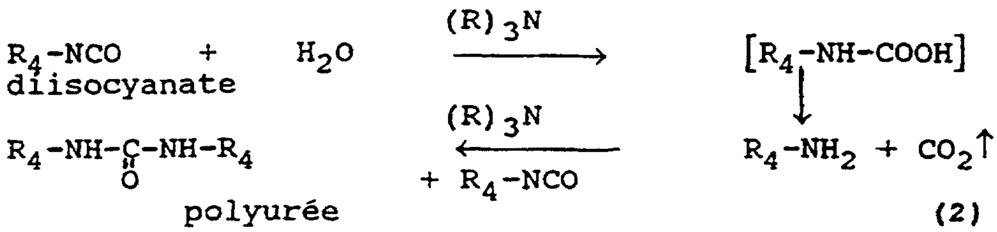


(2)

A partir de cette équation, on constate que pour former la polyurée, il faut deux moles de diisocyanate pour une mole d'eau ($n_{H2O}/n_{NCO}$ = 1/2). De l'acide carbamique, produit instable noté entre crochets dans l'équation (2), se forme au cours de la réaction.

De préférence, l'amine tertiaire utilisée en tant que catalyseur spécifique est du diazobicyclo 2,2,2 octane (DABCO). L'adhésion entre le substrat polymère et le polyuréthanne est rendue possible grâce à des liaisons Hydrogène et/ou Van der Walls qui se créent à l'interface entre les deux polymères. Par conséquent, le substrat polymère est avantageusement choisi parmi les polymères présentant des liaisons Hydrogène avec le polyuréthanne. Ainsi, par exemple, le substrat est réalisé en polychlorure de vinyle (PVC), ou en acrylonitril-butadiène-styrène (ABS), ou encore en polycarbonate (PC).

Etant donné que le diisocyanate réagit à la fois avec le polyol et avec l'humidité présente à la surface du substrat, il est important de calculer ses proportions, de manière à conserver une stoechiométrie idéale par rapport au polyol et à permettre une efficacité réactionnelle optimale lors de la formation du PU.

Sans tenir compte de l'eau, le diisocyanate et le polyol sont en stoechiométrie identique puisque, selon l'équation (1), une mole de diisocyanate réagit avec une mole de polyol pour former le polyuréthanne.

En revanche, en présence d'humidité de surface, il est nécessaire de rajouter un peu plus de diisocyanate de manière à conserver une stoechiométrie identique entre le polyol et le diisocyanate. Ainsi, le nombre de moles de diisocyanate, en présence d'humidité, est avantageusement d'environ 5% à 15% supérieur, de préférence 8% à 12% supérieur, au nombre de moles de diisocyanate en l'absence d'humidité.

Un exemple de calcul des proportions de diisocyanate nécessaire à la formation du réseau polyuréthanne et à la suppression de l'écran d'humidité est décrit dans ce qui suit. Dans cet exemple, le procédé d'adhésion selon l'invention est mis en oeuvre au cours de la fabrication d'une carte à puce sans contacts affleurant, comportant un corps de carte et un module électronique constitué d'une puce à circuit intégré reliée à une antenne. Le procédé de fabrication de la carte est réalisé, de manière connue, en plusieurs étapes consistant à déposer un cadre sur une feuille en polymère inférieure pour délimiter les bords d'une cavité, à positionner le module électronique au fond de la

cavité, à remplir cette cavité de résine apte à former le réseau polyuréthanne par polymérisation, et enfin à recouvrir le cadre et la cavité par une feuille en polymère supérieure sur laquelle est appliquée une légère pression.

Les deux feuilles inférieure et supérieure sont par exemple réalisée en polychorure de vinyle (PVC) et les composants de la résine, nécessaires à la formation du réseau PU, sont par exemple un polyester-éther-polyol et du diphénylméthane diisocyanate (MDI).

Les dimensions de chaque feuille PVC sont égales à 315 x 143 x 0,20 mm (millimètre), ce qui correspond à une surface de 315 x 143 x $10^{-4}$ = 450,5 $cm^2$. Les dimensions de la cavité sont égales à 270 x 90 x 0,430 mm, ce qui correspond à une surface de 270 x 90 x $10^{-4}$ = 243 $cm^2$. De plus, le poids d'une feuille de PVC est égal à 12,27g.

Le tableau ci-dessous permet de mettre en évidence les masses m en g (gramme), des groupements hydroxyle (OH) et isocyanate (NCO), qui ont été déterminées respectivement pour un gramme de polyol et de MDI. Les masses molaires M de ces groupements OH et NCO sont connues, si bien que les nombres de moles n de OH et de NCO ont pu être calculées respectivement pour un gamme de polyol et pour un gramme de MDI.

| $m_{OH}$/g de polyol | $M_{OH}$ | $n_{OH}$/g de polyol | $m_{NCO}$/g de MDI | $M_{NCO}$ | $n_{NCO}$/g de MDI |
|---|---|---|---|---|---|
| 0,02512 g | 17g | $1{,}478.10^{-3}$ | 0,31g | 42g | $7{,}38.10^{-3}$ |

A partir des données fournies par ce tableau,'on en déduit que : 1 mole de OH représente 17/0,02512 = 676,6g de polyol et 1 mole de NCO représente 42/0,31 = 135,5g de MDI.

Or, en l'absence d'eau et d'après l'équation (1), le rapport du nombre de moles de polyol sur le nombre de moles de MDI, c'est-à-dire le rapport du nombre de mole de groupement OH sur le nombre de moles de groupement NCO, est égal à : $n_{OH}/n_{NCO}$ = 1/1. Le rapport en poids de polyol/MDI devient donc égal à : 676,6/135,5 = 100/20. Par conséquent, en l'absence d'humidité, il faut mélanger 20g de MDI à 100g de polyol afin d'obtenir une stoechiométrie idéale permettant de former le réseau PU avec une efficacité réactionnelle optimale.

En présence d'humidité, il est préférable de conserver cette stoechiométrie identique entre le polyol et le MDI. Dans le cas où il y a 0,17% d'humidité à la surface de la feuille PVC, alors la masse d'eau à la surface de la feuille est égale à 0,17% x poids du PVC. Or le poids du PVC peut être déterminé en fonction des données précédemment citées de la manière suivante :

poids PVC = (poids feuille x surface fenêtre)/ surface feuille

poids PVC = 12,27 x 243/450,5 = 6,62g

La masse d'eau à la surface de la feuille est donc égale à 6.62 x 0,17/100 = 0,0112g. Or la masse molaire M de l'eau étant égale à 18g, le nombre de mole d'eau n $H_2O$ est égal à $6{,}25.10^{-4}$.

D'après l'équation (2), pour pouvoir transformer l'eau de surface en polyurée, il est nécessaire de faire réagir deux molécules de MDI sur une molécule d'eau. De ce fait, on en déduit le nombre de mole n de groupement NCO réagissant avec l'humidité présente à la surface du PVC : $n_{NCO}$ = $1{,}25.10^{-3}$ mole. Le nombre total de moles de NCO est donc égal à :

$$7{,}38.10^{-3} + 1{,}25.10^{-3} = 8{,}63.10^{-3} \text{ mole.}$$

Ce nombre correspond en fait à une augmentation de 11% par rapport au nombre de mole de NCO en l'absence d'humidité. Le rapport en poids de polyol/MDI, en présence d'humidité devient donc égal :

676,6/151,34 = 100/22.

En présence de 0,17% d'humidité à la surface de la feuille PVC, il faut donc mélanger 22g de MDI à 100g de polyol.

Enfin, un trop grand excès de diisocyanate par rapport au polyol nuit à la qualité de l'adhésion puisqu'il se crée des ponts urée et biuret formant un écran entre le PU et le PVC.

Comme on l'a compris de ce qui précède, le procédé de l'invention a pour avantage de pouvoir utiliser un substrat comportant des molécules d'eau constamment présentes à sa surface. Cela signifie qu'il n'est pas nécessaire de sécher le substrat pour avoir une bonne adhérence. On évite ainsi d'avoir à mettre en oeuvre une opération de séchage préalable à l'adhésion, ou une atmosphère à hygrométrie contrôlée qui autrement aurait été nécessaire pour

obtenir une adhérence du même ordre.

Une préférence est toutefois portée sur les catalyseurs de type soluble de manière à favoriser les réactions qui dans ce cas s'effectuent en phase homogène.

Bien que l'invention dans un mode préféré mette en oeuvre une étape de pressage finale pour obtenir la meilleure adhérence possible, on remarque que le procédé de l'invention mis en oeuvre sans l'étape de pressage, c'est-à-dire uniquement par contact, procure une amélioration de l'adhérence par rapport aux procédés de l'art antérieur mis en oeuvre également sans pressage sur un substrat humide.

L'invention vise bien entendu à protéger toute structure, 'en particulier une structure de carte à puce, comportant au moins un réseau en polyuréthanne, par exemple en couche, adhérant à au moins une surface d'un polymère telle que la surface d'une feuille, ledit réseau et ladite l'adhésion étant obtenues selon le procédé décrit supra.

## Revendications

1. Procédé de fabrication de carte à puce comportant une étape d'adhésion d'une surface en polyuréthanne bicomposant (PU) sur un substrat en polymère, ledit substrat comportant de l'humidité de surface, consistant à placer sur. le substrat, une résine comportant un polyol et un diisocyanate, et à opérer un pressage, **caractérisé en ce qu'**il consiste à utiliser un catalyseur choisi parmi les amines tertiaires, ledit catalyseur étant apte à catalyser simultanément la réaction du polyol avec le diisocyanate pour former le PU et la réaction de l'humidité de surface avec le diisocyanate pour transformer les molécules d'eau en polyurée.

2. Procédé selon la revendication 1, **caractérisé en ce que** le catalyseur est du Diazabicyclo 2,2,2 octane (DABCO).

3. Procédé selon l'une des revendications 1 à 2, **caractérisé en ce que** le catalyseur est dissout dans le polyol de composition de la résine.

4. Procédé selon l'une des revendications 1 à 3, **caractérisé en ce que** le matériau du substrat est choisi parmi des polymères présentant des liaisons Hydrogène avec le polyuréthanne.

5. Procédé selon la revendication 4, **caractérisé en ce que** le substrat est en polychlorure de vinyle (PVC), en acryionitril-butadiène-styrène (ABS) ou en polycarbonate (PC).

6. Procédé selon l'une des revendications 1 à 5, **caractérisé en ce qu'**en présence d'humidité le nombre de mole de diisocyanate est d'environ 5% à 15% supérieur au nombre de moles de diisocyanate en l'absence d'humidité.

7. Structure de corps de carte à puce comportant un réseau en polyuréthane, formé par réaction d'un polyol et d'un diisocyanate en présence d'un catalyseur choisi parmi les amines tertiaires, lequel réseau adhérant à au moins un substrat en polymère **caractérisée en ce qu'**elle comporte des molécules de polyurée à l'interface entre le réseau de polyuréthane et le substrat et **en ce que** les molécules de polyurée résultent de la réaction des molécules d'eau présentes à la surface du substrat avec le diisocyanate de la composition du polyuréthane en présence d'amines tertiaires.

## Patentansprüche

1. Herstellungsverfahren einer Chipkarte mit einer Haftetappe einer Oberfläche aus Polyurethan mit zwei Komponenten (PU) auf einem Substrat aus Polymer, wobei das besagte Substrat Oberflächenfeuchte aufweist, das darin besteht, auf dem Substrat durch Pressen ein Polyalkohol- und Diisocyanat-haltiges Harz aufzutragen, **dadurch gekennzeichnet, dass** es darin besteht, einen unter den tertiären Aminen gewählten Katalysator zu verwenden, wobei der besagte Katalysator geeignet ist, gleichzeitig die Reaktion des Polyalkohols mit dem Diisocyanat zur Bildung des PU und die Reaktion der Oberflächenfeuchte mit dem Diisocyanat zur Verwandlung der Wassermoleküle in Polyurea zu katalysieren.

2. Verfahren nach Anspruch 1, **dadurch gekennzeichnet, dass** der Katalysator Diazobizyklo 2.2.2 Oktan (DABCO) ist.

3. Verfahren nach einem der Ansprüche 1 bis 2, **dadurch gekennzeichnet, dass** der Katalysator im Polyalkohol der Zusammensetzung des Harzes aufgelöst wird.

4. Verfahren nach einem der Ansprüche 1 bis 3, **dadurch gekennzeichnet, dass** das Material des Substrats unter den Polymeren gewählt wird, die Wasserstoffverbindungen mit dem Polyurethan aufweisen.

5. Verfahren nach Anspruch 4, **dadurch gekennzeichnet, dass** das Substrat aus Vinylpolychlorid (PVC), Acrylnitril-Butadien-Styrol (ABS) oder aus Polykarbonat (PC) besteht.

6. Verfahren nach einem der Ansprüche 1 bis 5, **dadurch gekennzeichnet, dass** die Molzahl des Diisocyanats in Präsenz von Wasser etwa um 5% bis 15% höher ist als die Molzahl des Diisocyanats bei Abwesenheit von Wasser.

7. Chipkartenkörperaufbau mit einem Polyurethannetz, das durch die Reaktion eines Polyalkohols und eines Diisocyanats in Präsenz eines unter den tertiären Aminen gewählten Katalysators gebildet wird, wobei das Netz auf mindestens einem Substrat aus Polymer haftet, **dadurch gekennzeichnet, dass** er an der Schnittstelle zwischen dem Polyurethannetz und dem Substrat Polyurea-Moleküle aufweist, und dass die Polyurea-Moleküle aus der Reaktion der an der Oberfläche des Substrats vorhandenen Wassermoleküle mit dem Diisocyanat der Zusammensetzung des Polyurethans in Präsenz von tertiären Aminen resultiert.

## Claims

1. A method of manufacturing a smart card including a step of sticking a surface of two-component polyurethane (PU) to a polymer substrate, the said substrate including surface moisture, consisting of placing on the substrate a resin containing a polyol and a diisocyanate, and effecting a pressing, **characterised in that** it consists of using a catalyst chosen from amongst the tertiary amines, the said catalyst being able to simultaneously catalyse the reaction of the polyol with the diisocyanate in order to form PU and the reaction of the surface moisture with the diisocyanate in order to convert the water molecules into polyurea.

2. A method according to Claim 1, **characterised in that** the catalyst is diazabicyclo[2,2,2]octane (DABCO).

3. A method according to one of Claims 1 to 2, **characterised in that** the catalyst is dissolved in the polyol making up the resin.

4. A method according to one of Claims 1 to 3, **characterised in that** the material of the substrate is chosen from amongst polymers having hydrogen bonds with polyurethane.

5. A method according to Claim 4, **characterised in that** the substrate is made from polyvinyl chloride (PVC), acrylonitrile-butadiene-styrene (ABS) or polycarbonate (PC).

6. A method according to one of Claims 1 to 5, **characterised in that**, with moisture present, the number of moles of diisocyanate is approximately 5% to 15% greater than the number of moles of diisocyanate with no moisture present.

7. A smart card body structure having a polyurethane lattice, formed by the reaction of a polyol and a diisocyanate in the presence of a catalyst chosen from amongst the tertiary amines, the said lattice adhering to at least one polymer substrate, **characterised in that** it contains molecules of polyurea at the interface between the polyurethane lattice and the substrate and **in that** the molecules of polyurea result from the reaction of the water molecules present at the surface of the substrate with the diisocyanate making up the polyurethane in the presence of tertiary amines.